**Europäisches Patentamt**

**European Patent Office**

**Office européen des brevets**

(11) Veröffentlichungsnummer: **0 519 101 A1**

## (12) EUROPÄISCHE PATENTANMELDUNG

(21) Anmeldenummer: **91110107.9**

(22) Anmeldetag: **19.06.91**

(51) Int. Cl.5: **G06F 15/40**

(43) Veröffentlichungstag der Anmeldung:
**23.12.92 Patentblatt 92/52**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Netzsch, Rudolf, Dr.**
**Buchenstrasse 23 a**
**W-8021 Baierbrunn-Buchenhain(DE)**

(54) **Verfahren zur Adressierung von Datensätzen eines Datenbanksystems.**

(57) Jedem Datensatz ist in einem Datenbanksystem eine mehrteilige Schlüsseladresse (SA) zugeordnet. In einer Prozessoreinrichtung, bei der physikalische Adressen durch additive Verknüpfung von in Adressenregistern gespeicherten Adreßwerten gebildet werden, wird zunächst ein auf die Anfangsadresse eines relationsindividuellen Adreßinformationsblockes (AB) innerhalb des Speichers (SB) bezogener Adreßwert (ADI) ermittelt. In einem zweiten Adressierungsschritt (V2) wird ein auf die Anfangsadresse eines den zu adressierenden Datensatz (DSA) enthaltenden Datenblockes (DB) bezogener Adreßwert (ADD) erstellt. Bei einem dritten Adressierungsschritt (V3) wird dann ein auf die Anfangsadresse des Datensatzes (DSA) innerhalb des Datenblockes (DB) bezogener Adreßwert (ASD) ermittelt. Es lassen sich auf diese Weise hohe Zugriffgeschwindigkeiten bei der Adressierung von Datensätzen erzielen.

FIG 1

EP 0 519 101 A1

Die Erfindung betrifft ein Verfahren zur Adressierung von in einem frei adressierbaren Speicher gespeicherten Datensätzen in einem Datenbanksystems gemäß dem Oberbegriff der Patentansprüche 1, 2 oder 3.

Die Art der programmtechnischen Handhabung von Datenbeständen, insbesondere die zu implementierenden Zugriffsmechanismen sind bei der Konzeption von Datenverarbeitungsanlagen ein zentrales Thema. In funktionsspezifisch orientierten Datenverarbeitungseinrichtungen, die z. B. Steuer-, Regel- und Schaltfunktionen ausführen sind sowohl die Datenstrukturen an sich, wie auch die auftretende Datenmenge bei Erstellung des Anlagenprogrammes im wesentlichen bekannt und müssen nicht dynamisch angepaßt oder verändert werden. Bei dieser Art von Datenverarbeitungseinrichtungen werden Daten als zum Programm gehörig angesehen und Datenzugriffe zum Zwecke des Auslesens oder Einschreibens von Daten werden von Programmsequenzen ausgeführt, die individuell auf eine jeweilige Datenstruktur angepaßt sind und für die der Hinterlegungsort der betreffenden Daten im Arbeits- bzw. Programmspeicher zum Zeitpunkt der Programmerstellung unveränderlich festgelegt worden ist.

Eine solche Datenhandhabung ermöglicht sehr schnelle Zugriffszeiten auf den Datenbestand, weshalb sie auch insbesondere in echtzeitverarbeitenden Datenverarbeitungseinrichtungen implementiert ist. Andererseits ist diese Datenhaltung so starr, daß eine Umstrukturierung von Daten oder eine Vergrößerung des Datenbestandes nur durch eine entsprechende Anpassung des Anlagenprogrammes in Verbindung mit einer in der Regel unvermeidlichen Neufestlegung des jeweiligen Hinterlegungsortes der Daten im Datenspeicher möglich ist.

Für Datenverarbeitungsanlagen, die für einen universellen Einsatz vorgesehen sind, hat sich eine nach Datenbankprinzipien strukturierte Datenhaltung als vorteilhaft erwiesen. Die wesentlichen Vorteile einer solchen Datenhaltung sind darin zu sehen, daß sowohl die Datenmenge als auch die Datenstrukturen dynamisch geändert werden können, wobei das Anlagenprogramm selbst dabei nicht verändert werden muß. Verschiedenartige Datenstrukturen und die Zugriffe auf diese werden mit gleichen Programmsequenzen ausgeführt, wodurch eine bessere Überschaubarkeit des gesamten Systemes erzielt werden kann, und das Auftreten von Fehlern in der Programmerstellungsphase verringert wird. Außerdem werden damit die Voraussetzungen für die Verwendung von Datenbeschreibungssprachen geschaffen, wie sie z. B. bei relationalen Datenbanksystemen bekannt sind. Mit diesen Datenbeschreibungssprachen läßt sich die Dokumentation verbessern und der strukturelle Entwurf einer Datenbank erleichtern. Aufgrund vereinheitlichter Zugriffsfunktionen lassen sich auch die dem Datenschutz sowie der Sicherung der Daten gegen die Folgen von technischen Fehlfunktionen dienenden Schutzmechanismen für unterschiedliche Datenstrukturen einheitlich ausgestalten.

In bekannten datenverarbeitenden Einrichtungen sind die Daten des gesamten Datenbestandes auf einer Massenspeichereinrichtung, wie z. B. einem Plattenspeicher hinterlegt. Im Unterschied zu einem Halbleiterspeicher, der eine frei wählbare Adressierung erlaubt, ist bei einem derartigen Speichermedium nur eine sequentielle Adressierung der Daten möglich. Beim Zugriff auf eine, in der Massenspeichereinrichtung gespeicherte Dateneinheit, die in der Regel als Datensatz bezeichnet wird, muß zunächst aus der Massenspeichereinrichtung die den gesuchten Datensatz beinhaltende und durch Adressierung erreichbare Datenmenge - allgemein als Datenblock bezeichnet - ausgelesen und in den Arbeitsspeicher der Datenverarbeitungseinrichtung übertragen werden. Erst dann wird ein Zugriff auf den betreffenden Datensatz möglich und die im Datensatz befindlichen Daten können ausgelesen bzw. verändert werden.

Aufgrund der Tatsache, daß in bekannten datenverarbeitenden Einrichtungen die Kapazität des Arbeitsspeichers und damit des frei adressierbaren Speichers nicht ausreicht, um die gesamte Datenmenge aufnehmen zu können, sind bei den bekannten Datenbanksystemen Zugriffsverfahren implementiert, die auf in Massenspeichern hinterlegte Daten ausgerichtet sind.

Der programmtechnische Aufwand für diese Zugriffsverfahren ist, bedingt durch die zwei voneinander verschiedenen Adressierungsprinzipien - zum einen die sequentielle Adressierung in einem ersten Speichermedium (Massenspeichereinrichtung) und zum anderen die wahlfreie Adressierung in einem zweiten Speichermedium (Halbleiterspeicher) - erheblich. Zudem ermöglichen die hohen Datenzugriffszeiten, die durch die Fülle der vorzunehmenden programmtechnischen Verfahrensschritte und insbesondere durch die relativ hohen spezifischen Wartezeiten von Massespeichereinrichtungen entstehen, in der Regel keine Datenverarbeitung unter Echtzeitbedingungen.

Es wurden schon Versuche unternommen, bei Verwendung der bekannten Zugriffsverfahren durch Vergrößerung des Arbeitsspeichers die erforderliche Anzahl von Zugriffen auf die Massenspeichereinrichtung zu reduzieren, um eine Beschleunigung der Zugriffszeit zu erhalten. Es stellte sich dabei heraus, daß der Zeitgewinn in der Regel nicht ausreicht, um die Voraussetzung für eine Echtzeitverarbeitung zu schaffen.

Aufgabe der vorliegenden Erfindung ist es, in einer datenverarbeitenden Einrichtung bei Datenzugriffen nach Datenbankprinzipien verfahren zu können und die zeitlichen Bedingungen für Echtzeitverarbeitung zu erfüllen.

Gelöst wird diese Aufgabe ausgehend von dem Oberbegriff gemäß Anspruch 1, 2 oder 3 erfindungsgemäß durch die im kennzeichnenden Teil des Anspruchs 1, 2 oder 3 angegebenen Merkmale.

Die erfindungsgemäßen Adressierungsverfahren ermöglichen schnelle Zugriffe auf in einem frei adressierbaren Speicher, z. B. dem Arbeitsspeicher einer datenverarbeitenden Einrichtung, hinterlegten und nach Datenbankprinzipien über eine Schlüsseladresse lokalisierbare Datensätze. Mit den erfindungsgemäßen Adressierungsverfahren können hohe Zugriffsgeschwindigkeiten erzielt werden, weil für eine Implementierung dieser Verfahren jeweils relativ wenig Anweisungen an die Prozessoreinrichtung nötig sind und dabei insbesondere keine Anweisungen, wie Multiplikations- oder Divisionsbefehle, die eine lange Ausführungsdauer benötigen, verwendet werden.

Die erfindungsgemäßen Verfahren eignen sich für herkömmliche Prozessoreinrichtungen, wie z. B. den bekannten und weitverbreiteten Mikroprozessoren Intel 8086 oder 80286, die zur Adressierung eines physikalischen Speicherbereiches von wenigstens einem Mbyte Adressierungsmechanismen vorsehen, bei denen eine Bildung der physikalischen Adresse mit einem Segmentregister zur Festlegung eines Speichersegmentes innerhalb des Speichers und wenigstens einem Indexregister zur Bestimmung der Adresse innerhalb des Speichersegmentes erfolgt.

Den bei einer derartigen Segmentierung des Speichers häufig auftretenden Problemen, die darin bestehen, daß ein Speichersegment nur durch Änderung des Segmentregisters verlassen werden kann und ein Überschreiten der Grenzen des Speichersegmentes ständig überwacht werden muß, wird mit den erfindungsgemäßen Adressierungsverfahren durch eine mehrstufige Adressierung unter Verwendung einer aus drei Teiladressen zusammengesetzten Schlüsseladresse begegnet.

Mit dem ersten Teil der Schlüsseladresse wird zunächst die Relation (objektorientiertes Zuordnungskriterium in einer relationalen Datenbank) ermittelt, in die der gesuchte Datensatz eingeordnet ist. Mit dem zweiten Teil der Schlüsseladresse wird ein der Relation zugeordneter Adreßinformationsblock ausgewählt, und der dritte Teil der Schlüsseladresse dient zur Auswahl des Datensatzes.

Bei dem erfindungsgemäßen Adressierungsverfahren nach Anspruch 1 ist sowohl für die Relationsauswahltabelle als auch für die zu einer Relation gehörigen relationsindividuellen Adreßinformationsblöcke je ein eigenes Segment vorgesehen, so daß sich dieses Verfahren besonders für Fälle eignet, in denen die Anzahl der Relationen und die Zahl der Einträge in den Adreßinformationsblöcken erheblich ist.

Das erfindungsgemäße Adressierungsverfahren nach Anspruch 3 sieht dagegen vor, daß die Relationsauswahltabelle und die relationsindividuellen Adreßinformationsblöcke in einem gemeinsamen Segment abgespeichert sind. Dieses Verfahren ist damit besonders in den Fällen vorteilhaft, in denen die Zahl der Relationen und Datenblöcke eher gering ist, und die zeitlichen Anforderungen für Zugriffe strenger sind. Gegenüber dem Verfahren nach Anspruch 1 wird bei diesem Verfahren nämlich eine Änderung des Segmentregisters eingespart.

Das Adressierungsverfahren nach Anspruch 2 ist besonders dann vorteilhaft, wenn die zu einem Datenblock gehörigen Datensätze unterschiedliche Länge aufweisen können.

Die erfindungsgemäßen Adressierungsverfahren schaffen besonders gute Voraussetzungen für Reorganisationsverfahren, die betriebsbegleitend oder periodisch aufgrund des Löschens von Datensätzen auftretende Zerstückelung der Speicherbereiche beseitigen und damit wieder den verfügbaren Speicherbereich vergrößern.

Vorteilhafte Weiterbildungen der erfindungsgemäßen Verfahren sind in den Unteransprüchen angegeben.

Das Verfahren nach Anspruch 4 ist besonders für solche Fälle vorteilhaft, in denen ein gemeinsames Segment für die Relationsauswahltabelle und die relationsindividuelle Adreßinformationsblöcke nicht mehr ausreicht und doch nur zweimal das Segmentregister verändert werden soll, um möglichst schnelle Zugriffszeiten zu erzielen.

Mehrere Ausführungsbeispiele der Erfindung werden im folgenden anhand der Zeichnung näher erläutert.

Dabei zeigen

FIG 1 eine schematische Darstellung zur Veranschaulichung der speicher- und registerbezogenen Zusammenhänge für einen ersten und einen zweiten Verfahrensschritt,

FIG 2 eine schematische Darstellung zur Veranschaulichung der Zusammenhänge für einen dritten Verfahrensschritt,

FIG 3 eine schematische Darstellung zur Veranschaulichung einer Alternative zu den Verfahrensschritten nach FIG 1,

FIG 4 eine schematische Darstellung zur Veranschaulichung einer Weiterbildung der Alternative nach FIG 3, und

FIG 5 eine schematische Darstellung zur Veranschaulichung der speicher- und registerbezogenen Zusammenhänge für Adressierungsschritte als Alternative zu den in FIG 2 dargestellten.

Bei den Ausführungsbeispielen wird zur Vereinfachung angenommen, daß zwischen einer Anfangsadresse bzw. Adresse und dem auf diese bezogenen Adreßwert (vgl. Formulierung in den Patentansprüchen) kein Unterschied besteht. In der Praxis können eine Adresse und der auf diese bezogene Adreßwert, z.B. durch konstante Werte, durch Faktoren oder durch indirekte Adressierung voneinander abweichen. Angemerkt sei zudem, daß bei den bekannten Intelprozessoren die für eine solche Umsetzung von Adresse zu Adreßwert auszuführenden Operationen, (z.B. um aus einer, eine Speicherzelle bezeichnende Adresse den in ein verwendetes Indexregister zu ladenden Adreßwert zu ermitteln) in der Regel zeitunkritisch sind. In den nachfolgenden Ausführungsbeispielen ist dafür meistens nur ein Schiebebefehl um ein Bit erforderlich.

In den nachfolgenden Erläuterungen wird auf die bekannten Adressierungsmechanismen Bezug genommen, die z. B. eine speicherprogrammierte Prozessoreinrichtung des Typs SAB8086 aufweist. Diese als Mikroprozessor ausgebildete Prozessoreinrichtung beinhaltet acht Adressenregister in Form von vier Segment- und vier Indexregistern zu je 16 Bit.

Prinzipiell wird zur Bildung der physikalischen Adresse und damit der an den Adreßleitungen des Mikroprozessors auftretenden digitalen Pegel, der in einem Segmentregister gespeicherte Adreßwert um vier niederwertige Bits mit dem binären Wert "0" zu einer 20-Bit-Adresse ergänzt (d. h. mit dem Faktor 16 multipliziert) und zu dieser dann der Inhalt von einem oder zwei in ihrer Wertigkeit gleichen Indexregistern hinzuaddiert.

Bei einem adressierbaren Speicher von insgesamt 1 Mbyte wird damit durch das Segmentregister die Anfangsadresse eines 64 Kbyte großen Speicherbereiches festgelegt, innerhalb dessen eine Adressierung durch die Adreßwerte der Indexregister erfolgt.

Weitere Details zur Architektur und zu den Adressierungsmechanismen des Prozessors sind der einschlägigen Literatur, z. B. MCS-86, SAB8086 Family, User's Manual, October 1979, Siemens AG, zu entnehmen.

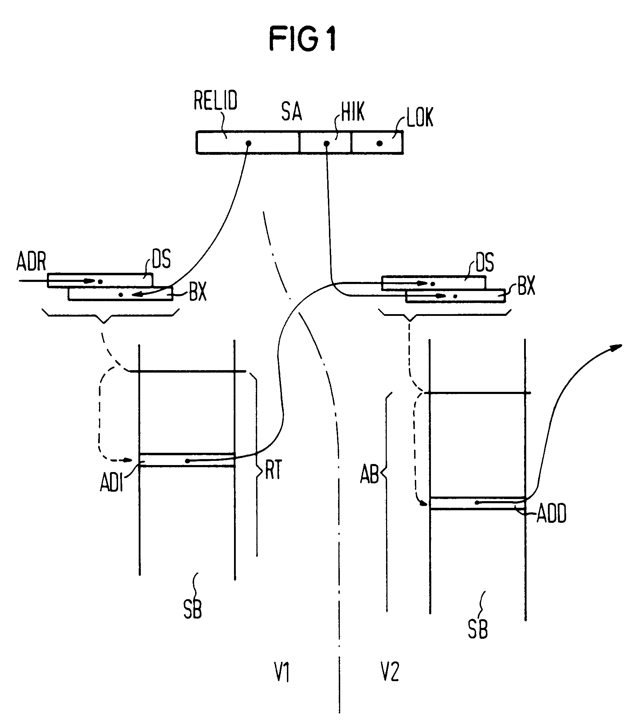

In FIG 1 ist symbolisch eine aus drei Teilen zusammengesetzte Schlüsseladresse SA dargestellt, mit einem Relationsidentifikator RELID als erstem, einem hochwertigen Schlüssel HIK als zweitem und einem niederwertigen Schlüssel LOK als drittem Teil der Schlüsseladresse SA. Der Relationsidentifikator RELID kann z. B. 16 Bit und die beiden Schlüssel HIK, LOK jeweils acht Bit lang sein.

Des weiteren sind nebeneinander die für einen ersten und einen zweiten Adressierungsschritt V1, V2 jeweils relevanten Segment- und Indexregister DS, BX sowie der dadurch adressierbare Speicherbereich SB symbolisch dargestellt.

Unter der für Datenbanksysteme geltenden Voraussetzung, daß jedem Datensatz eine Schlüsseladresse SA zugeordnet ist, wird zunächst in einem ersten Adressierungsschritt V1 zur Adressierung eines Datensatzes die im Datenbanksystem bekannte Anfangsadresse ADR einer Relationsauswahltabelle RT in das Segmentregister DS und der Relationsidentifikator RELID, der zum betreffenden Datensatz gehörigen Schlüsseladresse SA in ein Indexregister BX gespeichert.

Der Inhalt (16 Bit) der dadurch adressierten Speicherzelle stellt die Anfangsadresse ADI eines relationsindividuellen Adreßinformationsblockes AB dar. Durch einen Lesevorgang wird diese Anfangsadresse ADI ausgelesen und zur Vorbereitung eines zweiten Adressierungsschrittes V2 in das Segmentregister DS gespeichert.

Für den zweiten Adressierungsschritt V2 wird der hochwertige Schlüssel HIK in das Indexregister BX geladen, wodurch eine Speicherzelle (16 Bit) innerhalb des relationsindividuellen Adreßinformationsblockes AB adressiert wird. Der Inhalt dieser Speicherzelle stellt die Anfangsadresse ADD eines Datenblockes DB (nicht dargestellt) dar, und zwar diejenige des Datenblockes DB, in dem der gesuchte Datensatz DSA (nicht dargestellt) enthalten ist.

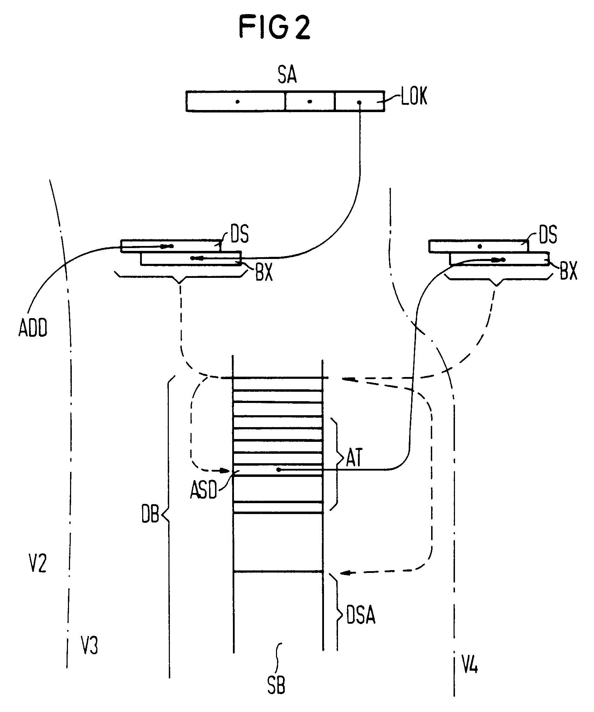

Durch einen Lesevorgang wird diese Speicherzelle ausgelesen und ihr Inhalt wird, wie in FIG 2 angedeutet, in das Segmentregister DS gespeichert.

FIG 2 zeigt in symbolischer Darstellung die Schlüsseladresse SA und die jeweils relevanten Segment- und Indexregister DS, BX zur Adressierung des gesuchten Datensatzes DSA innerhalb des betreffenden Datenblockes DB für die dem ersten und zweiten Adressierungsschritt V1, V2 nachfolgenden Adressierungsschritte. Am Anfang des Datenblockes DB, also ab seiner Anfangsadresse ADD, befindet sich eine sogenannte Aufsatzadressentabelle AT.

Diese Aufsatzadressentabelle AT beinhaltet für jeden Datensatz DSA des Datenblockes DB die innerhalb des Datenblockes DB relevante Adresse des betreffenden Datensatzes DSA. Die Datensätze DSA sind im Datenblock DB im Anschluß an die Aufsatzadressentabelle AT gespeichert.

Die in der Zeichnung durch Pfeile angedeuteten Adressierungsschritte setzen voraus, daß ein erster und zweiter Adressierungsschritt V1, V2 bereits erfolgt ist, und im Segmentregister DS die Anfangsadresse ADD des den zu adressierenden Datensatz DSA enthaltenden Datenblockes DB gespeichert ist.

Für einen dritten Adressierungsschritt V3 wird der niederwertige Schlüssel LOK in ein Indexregister BX gespeichert, wodurch eine Speicherzelle innerhalb der Aufsatzadressentabelle AT adressiert wird. Der Inhalt dieser adressierten Speicherzelle stellt die innerhalb des Datenblockes DB relevante Anfangsadresse ASD des gesuchten Datensatzes DSA dar. - Mit der Aufsatzadressentabelle AT wird eine Berechnung der Anfangsadresse des Datensatzes, für die auch Multiplikationsbefehle verwendet werden müßten, vermieden -. Durch einen Lesevorgang wird die Anfangsadresse ASD ausgelesen und in ein Indexregister BX geladen. Bei unverändert belassenem Segmentregister DS kann die erste Speicherzelle des Datensatzes DSA mit einem Adressierungsvorgang ausgelesen oder beschrieben werden. Durch schrittweise Erhöhung des Indexregisters BX lassen sich im weiteren sämtliche Speicherzellen des Datensatzes DSA adressieren.

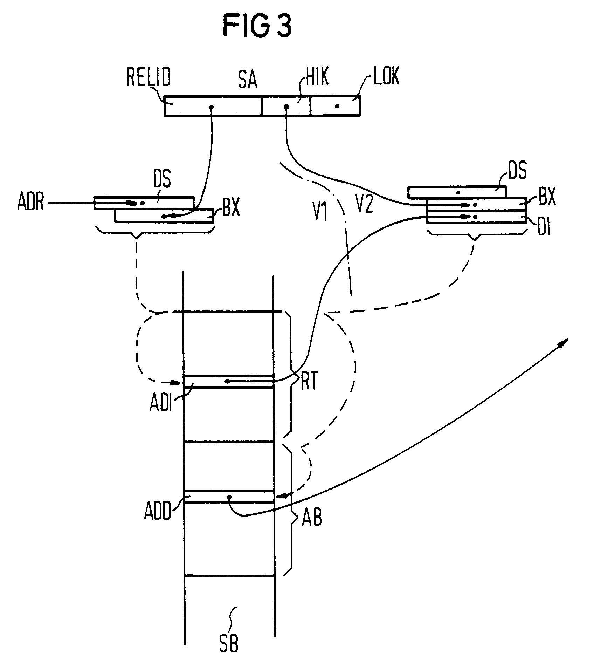

FIG 3 veranschaulicht eine Alternative zu dem ersten und zweiten Adressierungsschritt V1, V2 nach FIG 1. Bei dieser Alternative sind die Relationswauswahltabelle RT und die relationsindividuellen Adressinformationsblöcke AB innerhalb eines 64 KB Speichblockes angeordnet. Deshalb ist bei dieser Alternative für den ersten und zweiten Adressierungsschritt V1, V2 nur ein Segmentregisterladevorgang erforderlich, wodurch sich das Adressierungsverfahren aufgrund des Wegfalls der relativ langen Ausführungszeit eines Segmentregisterladevorgangs gegenüber dem in Zusammenhang mit FIG 1 beschriebenen Adressierungsverfahren beschleunigt.

In FIG 3 sind die Schlüsseladresse SA sowie die für einen ersten und zweiten Adressierungsschritt V1, V2 jeweils relevanten Segment- und Indexregister DS, BX und der adressierbare Speicherbereich SB symbolisch dargestellt. Für den ersten Adressierungsschritt V1 wird die im Datenbanksystem bekannte Anfangsadresse ADR einer Relationsauswahltabelle RT in das Segmenteregister DS und der Relationsidentifikator RELID der Schlüsseladresse SA in ein Indexregister BX gespeichert.

Der Inhalt der dadurch innerhalb der Relationsauswahltabelle RT adressierten Speicherzelle stellt eine innerhalb des Segmentes der Relationsauswahltabelle RT relevante Anfangsadresse ADI eines relationsindividuellen Adreßinformationsblockes AB dar. Mit einem Lesevorgang wird diese Anfangsadresse ADI des relationsindividuellen Adreßinformationsblockes AB in ein erstes Indexregister DI gespeichert.

Für den zweiten Adressierungsschritt V2 wird die hochwertige Schlüsseladresse HIK, die die Adresse einer Speicherzelle innerhalb des relationsindividuellen Adressinformationsblockes AB darstellt, in ein zweites Indexregister BX gespeichert. Eine Adressierung erfolgt über das unverändert belassene Segmentregister DS und die zueinander gleichwertigen beiden Indexregister DI, BX.

Mit einem Lesevorgang wird die adressierte Speicherzelle ausgelesen und ihr Inhalt, der die Anfangsadresse ADD eines Datenblocks DB darstellt, wird danach, wie in FIG 2 dargestellt, in das Segmentregister DS gespeichert. Die im weiteren zur Adressierung des gesuchten Datensatzes DSA erforderlichen Adressierungsschritte sind im Zusammenhang mit FIG 2 bereits erläutert worden.

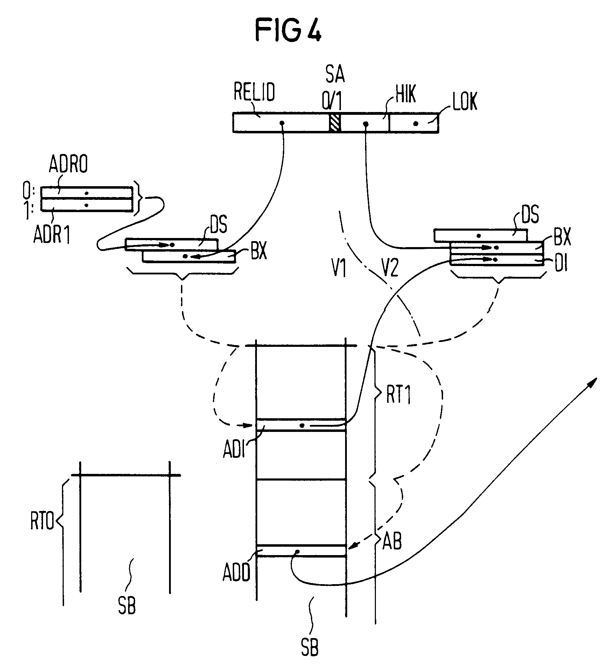

FIG 4 veranschaulicht eine Variante für die ersten und zweiten Adressierungsschritte V1 und V2 nach FIG 3, wobei der eigentliche Unterschied nur den ersten Verfahrensschritt V1 betrifft. Die gezeigte Variante ist in den Fällen von Interesse, in denen die Relationsauswahltabelle zusammen mit allen relationsindividuellen Adreßinformationsblöcken einen Speicherbereich beansprucht, der nicht mehr von einer Segmentadresse (16 Bit-Adresse) aus adressierbar ist, also den Bereich von 64 Kbit übersteigt.

Im gezeigten Beispiel ist der Inhalt der Relationsauswahltabelle und der relationsindividuellen Adreßinformationsblöcke (vgl. FIG 3) auf zwei Relationsauswahltabellen RT0, RT1 mit zwei unterschiedlichen Anfangsadressen ADR0, ADR1 verteilt, wobei unter einer jeweiligen Anfangsadresse einer Relationsauswahltabelle im Sinne des Adressierungsverfahrens nach FIG 3 sowohl die Relationsauswahltabelle als auch die zugehörigen relationsindividuellen Informationsblöcke adressierbar sind.

Aufgrund der Existenz von zwei Relationsauswahltabellen RT0, RT1 müssen im Datenbanksystem folglich zwei Anfangsadressen ADR0, ADR1 bekannt sein, von denen je nach Bedarf die eine oder die anderen für den ersten Adressierungsschritt V1 in das Segmentregister DS gespeichert wird. Die Entscheidung, welche der beiden Anfangsadressen ADR0, ADR1 für den ersten Adressierungsschritt V1 in das Segmentregister DS gespeichert wird, ist im vorliegenden Beispiel vom niederwertigsten Bit des Relationsidentifikators RELID abhängig. Im zweiten Adressierungsschritt V2 kann dann eine Adressierung natürlich nur innerhalb des die ausgewählte Relationsauswahltabelle und die zugehörigen Adreßinformationsblöcke beinhaltenden 64 Kbit Speicherbereichs erfolgen.

Reichen auch zwei 64-KByte-Blöcke nicht aus, so können entsprechend auch 4, 8, 16 usw. Relationsauswahltabellen gebildet werden, wobei dann zur Auswahl der Relationsauswahltabellen entsprechend die 2, 3, 4 usw. niederwertigsten Bits des Relationsidentifikators RELID verwendet werden.

Die im weiteren zur Adressierung des gesuchten Datensatzes DSA erforderlichen Verfahrensschritte sind im Zusammenhang mit FIG 2 bereits erläutert.

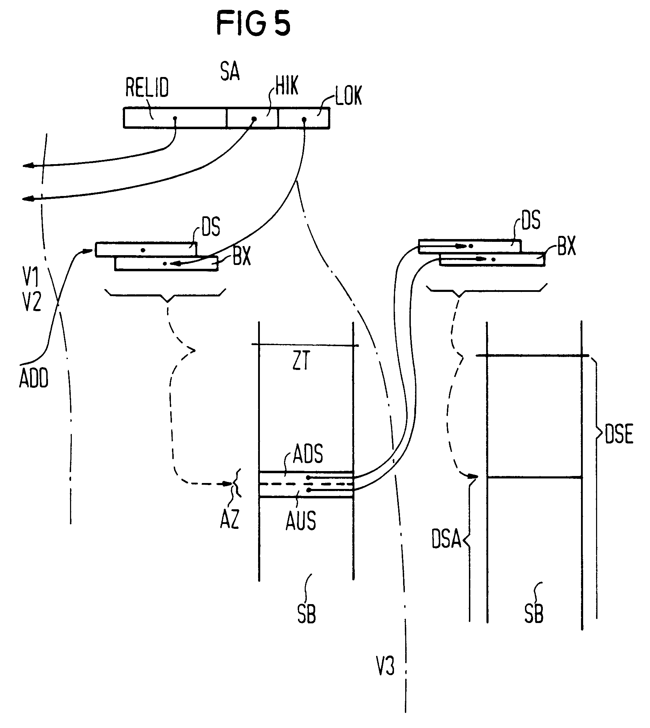

FIG 5 veranschaulicht eine Variante, bei der die beiden ersten Adressierungsschritte V1, V2 in gleicher Weise wie bei den vorhergehend beschriebenen Verfahren erfolgen, und eine Anfangsadresse ADD liefern; an dieser ist dann eine Segmentadresse hinterlegt, die zusammen mit dem niederwertigen Schlüssel LOK zur Adressierung eines Adreßzeigers AZ verwendet wird, der sich aus der Anfangsadresse ADS einer Datenseite DSE (entspricht im wesentlichen einem Datenblock) und einer Aufsatzadresse AUS innerhalb der Datenseite DSE zusammensetzt. Die Datenseite DSE ist als Speicherbereich anzusehen, der eine Vielzahl von Datensätzen, darunter auch den gesuchten Datensatz DSA, enthält; eine Aufsatzadressentabelle AT kann jedoch entfallen. Mit der Anfangsadresse ADS im Segmentregister DS und der Aufsatzadresse AUS in einem Indexregister BX wird dann der gesuchte Datensatz adressiert.

Für andere Mikroprozessoren der 8086-Familie, wie z. B. dem SAB 80286, oder SAB 80386 dient der im Segmentregister hinterlegte Wert (Selektor) dazu, mit Hilfe einer indirekten Adressierung aus einer Tabelle von Segmentadressen diejenige auszuwählen, die dann als Segmentadresse im Sinne der vorstehenden Beispiele gilt. Es kann jedoch für die vorliegende Erfindung als unerheblich angesehen werden, ob ein Adreßwert als Selektor zur Auswahl einer Segmentadresse oder als Segmentadresse selbst dient. Zu erwähnen ist außerdem, daß Segmentregisterwechsel relativ zeitaufwendig sind, so daß sich die in Zusammenhang mit Fig. 4 beschriebene Variante in zusätzlichem Maße als laufzeitvorteilhaft erweist.

**Patentansprüche**

1. Verfahren zur Adressierung von in einem frei adressierbaren Speicher (SB) gespeicherten Datensätzen in einem Datenbanksystem, bei dem jedem Datensatz zur Adressierung eine mehrteilige Schlüsseladresse (SA) zugeordnet ist, unter Verwendung einer speicherprogrammierten Prozessoreinrichtung, bei der physikalische Adressen durch additive Verknüpfung von in prozessorinternen Adressenregistern gespeicherten Adreßwerten ermittelt werden, **dadurch gekennzeichnet,** daß bei einem ersten Adressierungsschritt (V1), für den ein auf die Anfangsadresse einer Relationsauswahltabelle (RT) im Speicher (SB) bezogener Adreßwert (ADR) und ein aus dem ersten Teil (RELID) der Schlüsseladresse (SA) eines zu adressierenden Datensatzes (DSA) ermittelter Adreßwert in je einem Adressenregister (DS, BX) gespeichert sind, ein auf die Anfangsadresse eines relationsindividuellen Adreßinformationsblockes (AB) innerhalb des Speichers (SB) bezogener Adreßwert (ADI) ermittelt wird, daß bei einem zweiten Adressierungsschritt (V2), für den der auf die Anfangsadresse des relationsindividuellen Adreßinformationsblockes (AB) innerhalb des Speichers (SB) bezogene Adreßwert (ADI) und ein aus dem zweiten Teil (HIK) der Schlüsseladresse (SA) ermittelter Adreßwert in je einem Adressenregister (DS, BX) gespeichert sind, ein auf die Anfangsadresse eines den zu adressierenden Datensatz (DSA) enthaltenden Datenblockes (DB) im Speicher (SB) bezogener Adreßwert (ADD) ermittelt wird und daß bei einem dritten Adressierungsschritt (V3), für den der auf die Anfangsadresse des Datenblockes (DB) innerhalb des Speichers (SB) bezogene Adreßwert (ADD) und ein aus dem dritten Teil (LOK) der Schlüsseladresse (SA) ermittelter Adreßwert in je einem Adressenregister (DS, BX) gespeichert sind, ein auf die Anfangsadresse des Datensatzes (DSA) innerhalb des Datenblockes (DB) bezogener Adreßwert (ASD) ermittelt wird.

2. Verfahren zur Adressierung von in einem frei adressierbaren Speicher (SB) gespeicherten Datensätzen (DSA) in einem Datenbanksystem, bei dem jedem Datensatz zur Adressierung desselben eine mehrteilige Schlüsseladresse (SA) zugeordnet ist, unter Verwendung einer speicherprogrammierten Prozessoreinrichtung, bei der physikalische Adressen durch additive Verknüpfung von in prozessorinternen Adressenregistern gespeicherten Adreßwerten ermittelt werden, **dadurch gekennzeichnet,** daß bei einem ersten Adressierungsschritt (V1), für den ein auf die Anfangsadresse einer Relationsauswahltabelle (RT) im Speicher (SB) bezogener Adreßwert (ADR) und ein aus dem ersten Teil (RELID) der Schlüsseladresse (SA) eines zu adressierenden Datensatzes (DSA) ermittelter Adreßwert in je einem Adressenregister (DS, BX) gespeichert sind, ein auf die Anfangsadresse eines relationsindividuellen Adreßinformationsblockes (AB) innerhalb des Speichers (SB) bezogener Adreßwert (ADI) ermittelt wird, daß bei einem zweiten Adressierungsschritt (V2), für den der auf die Anfangsadresse des relationsindividuellen Adreßinformationsblockes (AB) innerhalb des Speichers (SB) bezogene Adreßwert (ADI) und ein aus dem zweiten Teil (HIK) der Schlüsseladresse (SA) ermittelter Adreßwert in je einem Adressenregister (DS, BX) gespeichert sind, ein auf die Anfangsadresse einer Zeigertabelle (ZT) im Speicher (SB) bezogener Adreßwert (ADD) ermittelt wird, und

daß in einem dritten Adressierungsschritt (V3) für den der im zweiten Adressierungsschritt (V2) ermittelte Adreßwert (ADD) und ein aus dem dritten Teil (LOK) der Schlüsseladresse (SA) ermittelter Adreßwert in je einem Adressenregister (DS, BX) eingespeichert sind ein sowohl Anfangsadresse (ADS) wie auch Aufsatzadresse (AUS) umfassender Adreßzeiger (AZ) ermittelt wird, der in einem weiteren Adressierungsschritt zum Auffinden des gesuchten Datensatzes (DSA) dient.

3. Verfahren zur Adressierung von in einem frei adressierbaren Speicher (SB) gespeicherten Datensätzen (DSA) in einem Datenbanksystem, bei dem jedem Datensatz zur Adressierung desselben eine mehrteilige Schlüsseladresse (SA) zugeordnet ist, unter Verwendung einer speicherprogrammierten Prozessoreinrichtung, bei der physikalische Adressen durch additive Verknüpfung von in prozessorinternen Adressenregistern gespeicherten Adreßwerten ermittelt werden,
**dadurch gekennzeichnet,**
daß bei dem ersten Adressierungsschritt (V1), für den ein auf die Anfangsadresse einer Relationsauswahltabelle (RT) im Speicher (SB) bezogener Adreßwert (ADR) und ein aus dem ersten Teil (RELID) der Schlüsseladresse (SA) eines zu adressierenden Datensatzes (DSA) ermittelter Adreßwert in je einem Adressenregister (DS, BX) gespeichert sind, ein auf die Anfangsadresse eines relationsindividuellen Adreßinformationsblockes (AB) bezogener Adreßwert (ADI) ermittelt wird,
daß bei einem zweiten Adressierungsschritt (V2), für den der auf die Anfangsadresse der Relationsauswahltabelle (RT) im Speicher (SB) bezogene Adreßwert (ADR), der auf die Anfangsadresse des relationsindividuellen Adreßinformationsblockes (AB) bezogene Adreßwert (ADI) und ein aus dem zweiten Teil (HIK) der Schlüsseladresse (SA) ermittelter Adreßwert in je einem Adressenregister (DS, DI, BX) gespeichert sind, ein auf die Anfangsadresse eines den zu adressierenden Datensatz (DSA) enthaltenden Datenblockes (DB) im Speicher (SB) bezogener Adreßwert (ADD) ermittelt wird und
daß bei einem dritten Adressierungsschritt (V3), für den der auf die Anfangsadresse des Datenblockes (DB) innerhalb des Speichers (SB) bezogene Adreßwert (ADD) und ein aus dem dritten Teil (LOK) der Schlüsseladresse (SA) ermittelter Adreßwert in je einem Adressenregister (DS, BX) gespeichert sind, ein auf die Anfangsadresse des Datensatzes (DSA) innerhalb des Datenblockes (DB) bezogener Adreßwert (ASD) ermittelt wird.

4. Verfahren nach Anspruch 3,
**dadurch gekennzeichnet,**
daß bei dem ersten Adressierungsschritt (V1) nach Maßgabe eines innerhalb des ersten Teiles (RELID) der Schlüsseladresse (SA) vorgesehenen Selektorwertes eine von mehreren Relationsauswahltabellen (RT0, RT1) ausgewählt wird, wobei ein auf die Anfangsadresse der ausgewählten Relationsauswahltabelle (RT1) bezogener Adreßwert (ADI) in einem Adressenregister (DS) gespeichert wird.

5. Verfahren nach einem der vorhergehenden Ansprüche,
**dadurch gekennzeichnet,**
daß die Datensätze (DSA) innerhalb eines Datenblockes (DB) jeweils gleich lang sind und
daß im Datenblock (DB) ein die Länge der Datensätze (DSA) anzeigender Längenwert gespeichert ist, mittels dessen die Anzahl der zum Auslesen oder Einschreiben eines jeweiligen Datensatzes (DSA) erforderlichen weiteren Adressierungsschritte ermittelt werden.

6. Verfahren nach Anspruch 5,
**dadurch gekennzeichnet,**
daß für den Fall, daß aus der Aufsatzadressentabelle (AT) als maßgebliche Adresse eines zu adressierenden Datensatzes (DSA) ein Nullwert ermittelt wird, dieser Datensatz (DSA) als nicht gültig bewertet wird.

7. Verwendung eines Verfahrens nach einem der vorhergehenden Ansprüche in einer, große Datenbestände unter Echtzeitanforderungen bearbeitenden Datenverarbeitungseinrichtung.

# FIG 1

# FIG 2

# FIG 3

# FIG 4

# FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 369 829 (SHARP KK) <br> * Seite 3, Zeile 50 - Seite 4, Zeile 58 * <br> * Zusammenfassung; Ansprüche 1,30; Abbildung 2 * <br> --- | 1-3 | G06F15/40 |
| A | FR-A-2 022 059 (N.V. PHILIPS' GLOEILAMPENFABRIEKEN) <br> * Seite 1, Zeile 1 - Seite 6, Zeile 15; Abbildung 1 * <br> --- | 1-3 | |
| A | MINI MICRO CONFERENCE RECORD. <br> 8. November 1983, NEW YORK, US <br> Seiten 1 - 8; <br> S.J.GROSS: 'An IEEE-696 bus, virtual memory, desktop computer architecture' <br> * das ganze Dokument * <br> --- | 1-3 | |
| A | US-A-4 876 646 (S. GOUTOU ET AL) <br> * das ganze Dokument * <br><br> ----- | 1-3 | |
| | | | **RECHERCHIERTE SACHGEBIETE (Int. Cl.5 )** |
| | | | G06F |

Der vorliegende Recherchenbericht wurde für alle Patentansprüche erstellt

| Recherchenort | Abschlußdatum der Recherche | Prüfer |
|---|---|---|
| DEN HAAG | 29 JANUAR 1992 | FOURNIER C.D.J. |